# EUROPEAN PATENT APPLICATION

(11) **EP 3 778 226 A1**
(43) Date of publication of application: **17.02.2021**
(21) Application number: 19778311.1
(22) Date of filing: 22.03.2019
(51) Int. Cl.: B32B 27/10, B32B 27/20, B32B 27/30, B32B 27/32, D06N 3/00, D21H 27/00, D21H 27/30

(54) **LAMINATE AND PROCESSING PAPER**

(30) Priority: 29.03.2018 JP 2018065690
(71) Applicant: LINTEC Corporation, Tokyo 173-0001 (JP)
(72) Inventor: SASAKI, Yasushi, Tokyo 173-0001 (JP); TAKATA, Yoshio, Tokyo 173-0001 (JP); TAKAOKA, Kenji, Tokyo 173-0001 (JP); KANEKO, Satoshi, Tokyo 173-0001 (JP); KAMO, Masayasu, Tokyo 173-0001 (JP)
(74) Representative: Gille Hrabal
(86) International application number: PCT/JP2019/012184
(87) International publication number: WO 2019/188822

(57) **Abstract**

Provided are a laminate and a casting paper which, though using a smooth base paper, can sufficiently secure the adhesiveness between the base paper and a release layer and can maintain the adhesiveness even at high temperatures. The laminate has a laminated structure of a base paper 11, an adhesion-enhancing layer (A) 12 and a polypropylene-based resin layer (B) 13 laminated in that order, wherein at least the surface on the side of the adhesion-enhancing layer (A) 12 of the base paper 11 has an Oken-type smoothness of 100 seconds or more, and the adhesion-enhancing layer (A) 12 contains necklace-like colloidal silica-derived silica particles (S) and a polyvinyl alcohol (P), and the content ratio of the silica particles (S) to the polyvinyl alcohol (P) (S/P) is 20/5 to 20/30 as a ratio by mass.

## Description

### Technical Field

The present invention relates to a laminate and a casting paper.

### Background Art

Recently, laminates having various configurations have become utilized in various industrial scenes.

For example, for production of synthetic leathers, prepregs and plastic films, laminates such as process release papers having a base paper and a release layer are often used.

As such a laminate, PTL 1 describes a casting paper for soft urethane foam production, which contains a base paper, and a polypropylene-laminated film layer laminated on the base paper.

### Citation List

### Patent Literature

PTL 1: JP 9-48031 A

### Summary of Invention

### Technical Problem

Recently, from the viewpoint of improving the beautifulness of the surface design of synthetic leathers and plastic film, an industrial demand for improving the sharpness of the surface of a release layer of a laminate has become increased. Namely, in the case where smoothness is required for the surface of synthetic leathers and others, the surface of a release layer is made to be smoother, or when an embossing design is to be given to the surface of synthetic leathers and others, the surface of a release layer is expected to have a sharper emboss profile.

For satisfying these demands, it is considered to use a smooth base paper so as to minimize the roughness of the release layer that may be caused by the roughness of the base paper. Accordingly, it is considered that the sharpness of the surface of the release layer of a laminate can be improved and the beautifulness of the surface design can be improved further more.

However, with improving the smoothness of a base paper, it would become more difficult to secure the adhesiveness owing to an anchor effect between the base paper and a release layer. In particular, when a laminate is exposed to high temperatures, it would become more difficult to secure the adhesiveness. The problem could not be solved by conventional adhesion-enhancing treatment such as corona discharge treatment or ozone treatment.

The present invention has been made in consideration of the problems, and its object is to provide a laminate and a casting paper which, though using a smooth base paper, can sufficiently secure adhesiveness between the base paper and a release layer, and in addition, can maintain the adhesiveness even at high temperatures.

### Solution to Problem

The present inventors have found the following (1) to (3), and have completed the present invention.
(1) The laminate has a laminated structure of a base paper, an adhesion-enhancing layer and a polypropylene-based resin layer as laminated in that order.
(2) The adhesion-enhancing layer contains silica particles derived from a necklace-like colloidal silica and a polyvinyl alcohol, and the necklace-like colloidal silica-derived silica particles and the polyvinyl alcohol are in a specific content ratio.
(3) Because of (1) and (2), the adhesiveness between the polypropylene-based resin layer as a release layer and the base paper can be sufficiently secured even though using a base paper whose surface on the side of the adhesion-enhancing layer has an Oken-type smoothness of 100 seconds or more, and in addition, the adhesiveness can be sufficiently secured even at high temperatures.

Specifically, the present invention relates to the following [1] to [5].
[1] A laminate having a laminated structure of a base paper, an adhesion-enhancing layer (A) and a polypropylene-based resin layer (B) laminated in that order, wherein at least the surface on the side of the adhesion-enhancing layer (A) of the base paper has an Oken-type smoothness of 100 seconds or more, and the adhesion-enhancing layer (A) contains necklace-like colloidal silica-derived silica particles (S) and a polyvinyl alcohol (P), and the content ratio of the silica particles (S) to the polyvinyl alcohol (P) (S/P) is 20/5 to 20/30 as a ratio by mass.
[2] The laminate according to the above [1], wherein the necklace-like colloidal silica is a pearl necklace-like one.
[3] The laminate according to the above [1] or [2], wherein the polypropylene-based resin layer (B) is formed of 2 or more layers and the outermost layer at least on the side opposite to the adhesion-enhancing layer (A) has a tensile modulus of elasticity of 1300 MPa or more.
[4] A casting paper including the laminate of any one of the above [1] to [3].
[5] A casting paper for synthetic leather production, including the laminate of any one of the above [1] to [3].

### Advantageous Effects of Invention

According to the present invention, there can be provided a laminate and a casting paper which, though using a smooth base paper, can sufficiently secure adhesiveness between the base paper and a release layer, and in addition, can maintain the adhesiveness even at high temperatures.

### Brief Description of Drawings

Fig. 1 is a schematic cross-sectional view of a laminate of one embodiment of the present invention.
Fig. 2 is a schematic cross-sectional view of a laminate of another embodiment of the present invention.

### Description of Embodiments

The laminate of the present invention has a laminated structure of a base paper, an adhesion-enhancing layer (A) and a polypropylene-based resin layer (B) laminated in that order.

The base paper is such that at least the surface thereof on the side of the adhesion-enhancing layer (A) has an Oken-type smoothness of 100 seconds or more.

The adhesion-enhancing layer (A) contains necklace-like colloidal silica-derived silica particles (S) and a polyvinyl alcohol (P). The content ratio of the silica particles (S) to the polyvinyl alcohol (P) (S/P) is 20/5 to 20/30 as a ratio by mass.

Hereinunder the configuration of the laminate of the present invention is first described, and then the constituent elements of the laminate, and a production method and a use method for the laminate are described sequentially.

### [Configuration of Laminate]

The laminate of the present invention has a laminated structure of a base paper, an adhesion-enhancing layer (A) and a polypropylene-based resin layer (B) laminated in that order.

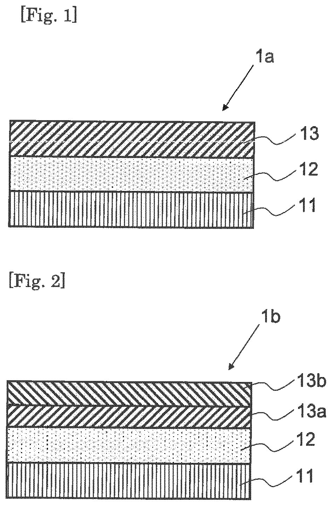

One embodiment of the laminate of the present invention is, for example, a laminate 1a shown in Fig. 1.

The laminate 1a shown in Fig. 1 has an adhesion-enhancing layer (A) 12 and a polypropylene-based resin layer (B) 13 laminated in that order on one surface of a base paper 11. Namely, the laminate 1a shown in Fig. 1 is a laminate using one surface alone of the base paper 11.

In the laminate 1a shown in Fig. 1, the base paper 11 and the adhesion-enhancing layer (A) 12, and the adhesion-enhancing layer (A) 12 and the polypropylene-based resin layer 13 are directly laminated not via any other layer. Accordingly, the laminate 1a shown in Fig. 1 is formed of the base paper 11, the adhesion-enhancing layer (A) 12 and the polypropylene-based resin layer (B) 13 alone.

However, the laminate 1a shown in Fig. 1 is not always restricted to such a configuration. For example, in at least any of between the base paper 11 and the adhesion-enhancing layer (A) 12, and between the adhesion-enhancing layer (A) 12 and the polypropylene-based resin layer (B) 13, any other layer may be provided as needed. Also for example, the base paper 11 may be a single layer or has a multilayer structure.

Here, in the laminate of one embodiment of the present invention, the polypropylene-based resin layer (B) 13 is preferably a multilayer structure.

The laminate 1b shown in Fig. 2 is a laminate differing from the laminate 1a shown in Fig. 1 in that the polypropylene-based resin layer (B) 13 has a two-layer structure. In detail, a polypropylene-based resin layer (B) 13a is arranged on the side of the adhesion-enhancing layer (A) 12, and a polypropylene-based resin layer (B) 13b is provided as an outermost layer of the laminate 1b.

As in the laminate 1b shown in Fig. 2, the polypropylene-based resin layer (B) may have a multilayer structure in such a manner that a soft polypropylene-based resin layer 13a is arranged on the side of the adhesion-enhancing layer (A) 12 and a hard polypropylene-based resin layer 13b is arranged on the outermost layer side, and accordingly, the adhesiveness between the base paper and the polypropylene-based resin (B) can be bettered. In addition, the outermost layer can be readily prevented from cracking, and the laminate can be readily prevented from curling.

In the above-mentioned embodiments, the adhesion-enhancing layer (A) and the polypropylene-based resin layer (B) are laminated in that order on one surface of the base paper, but in the laminate of another embodiment of the present invention, the adhesion-enhancing layer (A) and the polypropylene-based resin layer (B) may be laminated in that order on both surfaces of the base paper.

In the laminate of the present invention, the adhesion-enhancing layer (A) is provided between the base paper and the polypropylene-based resin layer (B). The adhesion-enhancing layer (A) has a specific composition as described below, and therefore, even though a highly-smooth base paper having an Oken-type smoothness of 100 seconds or more is used, the adhesiveness between the base paper and the polypropylene-based resin layer (B) can be sufficiently secured. Moreover, the adhesiveness can be still maintained even at high temperatures.

### [Base Paper]

The base paper for use herein is such that at least the surface on the side of the adhesion-enhancing layer (A) thereof has an Oken-type smoothness of 100 seconds or more, and this functions as a support of the laminate of the present invention.

Here, in the laminate of the present invention, from the viewpoint of further improving the sharpness of the surface of the polypropylene-based resin layer (B) that functions as a release layer, the Oken-type smoothness of the surface on the side of the adhesion-enhancing layer (A) of the base paper is preferably 200 seconds or more, more preferably 500 seconds or more, even more preferably 1000 seconds or more.

The Oken-type smoothness is measured according to JIS P8155:2010. Specifically, it is measured according to the method described in the section of Examples.

In the present invention, such a highly-smooth base paper is used, and therefore the surface roughness of the polypropylene-based resin layer (B) can be minimized. As a result, the sharpness of the outermost surface of the laminate, that is, the surface of the polypropylene-based resin layer (B) can be thereby bettered.

The base paper for use in the present invention is not specifically limited so far as at least the surface thereof on the side of the adhesion-enhancing layer (A) has an Oken-type smoothness of 100 seconds or more, and the base paper may be a single layer or may have a multilayer structure. For example, the base paper includes wood-free paper, glassine paper, art paper, coated paper and cast-coated paper.

Among these, from the viewpoint of the smoothness of the base paper, the degree of the strength of the base paper and the easy availability thereof, wood-free paper, coated paper and cast-coated paper are preferred, coated paper and cast-coated paper are more preferred, and cast-coated paper is even more preferred.

In the case where the roughness of the base paper differs between the two sides thereof, the surface whose Oken-type smoothness is to be measured is the surface of the base paper on which the adhesion-enhancing layer (A) is to be provided. Namely, regarding cast-coated paper, in the case where the adhesion-enhancing layer (A) is provided on the cast-coated surface thereof and where the polypropylene-based resin layer (B) is on the adhesion-enhancing layer (A), the cast-coated surface of the cast-coated paper is the surface whose Oken-type smoothness is to be measured.

Though not specifically limited, the thickness of the base paper is generally 50 to 1000 µm, preferably 100 to 500 µm, more preferably 100 to 300 µm.

Though not specifically limited, the weight of the base paper is, from the viewpoint of enhancing paper strength to improve processability, and from the viewpoint of easiness in peeling from an adherend, preferably 50 to 1000 g/m², more preferably 70 to 300 g/m², even more preferably 100 to 200 g/m².

### [Adhesion-enhancing Layer (A)]

In the present invention, the adhesion-enhancing layer (A) contains necklace-like colloidal silica-derived silica particles (S) and a polyvinyl alcohol (P). Also in the present invention, the content ratio of the silica particles (S) to the polyvinyl alcohol (P) (S/P) is 20/5 to 20/30 as a ratio by mass.

When the adhesion-enhancing layer (A) has such a composition, the adhesiveness between the base paper and the polypropylene-based resin layer (B) can be sufficiently secured, and moreover, the adhesiveness can be maintained even at high temperatures. Specifically, the adhesiveness can be maintained even at 130°C. Further, even at 160°C, the adhesiveness can be maintained.

In the case where any other material than the necklace-like colloidal silica-derived silica particles (S) is used as a filler, such an effect cannot be attained. For example, even when spherical silica particles are used as a filler, such an effect cannot be attained.

Also in the case where the content ratio of the silica particles (S) to the polyvinyl alcohol (P) (S/P) falls outside the above-mentioned range, the above-mentioned effect cannot also be attained.

In one embodiment of the present invention, the adhesion-enhancing layer (A) may contain any other component than the above-mentioned components (S) and (P) within a range not detracting from the advantageous effects of the present invention.

In one embodiment of the present invention, the total content of the above-mentioned components (S) and (P) in the adhesion-enhancing layer (A) is based on the adhesion-enhancing layer (A) (100% by mass), preferably 70 to 100% by mass, more preferably 80 to 100% by mass, even more preferably 90 to 100% by mass, further more preferably 95 to 100% by mass.

Hereinunder the necklace-like colloidal silica-derived silica particles (S), the polyvinyl alcohol (P) and the content ratio of these are described in detail.

### <Necklace-like colloidal silica-derived silica particles (S)>

The necklace-like colloidal silica-derived silica particles (S) are used as a water-soluble filler in the adhesion-enhancing layer (A).

Necklace-like colloidal silica is also called a rosary-like colloidal silica, and is a secondary aggregate of silica particles having a structure where plural silica particles are aggregated in a linear or branched manner. The aggregated structure may be a closed structure, or may also be an open structure.

Here, in the laminate of the present invention, it is considered that the adhesion-enhancing layer (A) is in a dry state. Consequently, in the adhesion-enhancing layer (A), the necklace-like colloidal silica does not exist at least in a colloidal state.

However, in the adhesion-enhancing layer (A) in a dry state, it is difficult to specify and define the structure and the characteristics of the necklace-like colloidal silica. Further, in the adhesion-enhancing layer (A) in a dry state, even when the structure of the necklace-like colloidal silica is tried to be specified according to a known analysis method, it is obvious that an extremely complicated analysis method is desired including decomposition of the laminate, partial cleavage of the adhesion-enhancing layer (A) and further establishment of a structure observing method.

Accordingly, the situation is that, in the adhesion-enhancing layer (A) in a dry state, it is not almost realistic to directly specify the necklace-like colloidal silica by the structure or the characteristics thereof.

Consequently, in the laminate of the present invention, an expression of "necklace-like colloidal silica-derived silica particles (S)" is used, and the silica particles (S) are defined by the condition in blending thereof.

An average primary particle size of the necklace-like colloidal silica is preferably 0.001 to 0.100 µm, more preferably 0.005 to 0.050 µm, even more preferably 0.010 to 0.030 µm.

An average particle size of the necklace-like colloidal silica is preferably 0.030 to 0.200 µm, more preferably 0.040 to 0.150 µm.

The average primary particle size of the necklace-like colloidal silica is a value converted from a measured value of the specific surface area thereof according to the BET adsorption method (according to JIS Z8830:2013) (under presumption that the primary particles are spherical and poreless particles), and the average particle size is a measured value according to a dynamic light scattering method (according to JIS Z8828:2013).

### <Polyvinyl Alcohol (P)>

The polyvinyl alcohol (P) is used as a water-soluble binder in the adhesion-enhancing layer (A).

The polyvinyl alcohol (P) includes a modified polyvinyl alcohol in addition to an ordinary polyvinyl alcohol prepared through hydrolysis of a polyvinyl acetate. The modified polyvinyl alcohol includes a cationic modified polyvinyl, an anionic modified polyvinyl alcohol, a nonionic modified polyvinyl alcohol, and a vinyl alcohol-based polymer. From the viewpoint of bettering the mixed condition of the polyvinyl alcohol (P) and the silica particles (S), preferably, the charge of the polyvinyl alcohol (P) is the same as the charge of the silica particles (S).

From the viewpoint of preventing cracking in forming the adhesion-enhancing layer (A), from the viewpoint of bettering temporal stability of an aqueous solution to form the adhesion-enhancing layer (A), and from the viewpoint of bettering heat resistance of the adhesion-enhancing layer (A), preferably used is a polyvinyl alcohol prepared by hydrolyzing a polyvinyl acetate and having an average polymerization degree of 500 or more, more preferably an average polymerization degree of 500 to 3000, even more preferably 500 to 1700.

The saponification degree of the polyvinyl alcohol is, from the viewpoint of bettering water resistance of the adhesion-enhancing layer (A), preferably 70 to 100%, more preferably 80 to 99.5%, even more preferably 90 to 99.5%, further more preferably 95 to 99.5%.

In one embodiment of the present invention, the polyvinyl alcohol (P) may contain any other component than a polyvinyl alcohol within a range not detracting from the advantageous effects of the present invention. For example, the polyvinyl alcohol (P) may contain additives such as a waterproofing agent, a tackifier, a defoaming agent and a preservative. However, even in the absence of such additives, the effect of the present invention can be exerted.

One alone or two or more kinds of polyvinyl alcohols (P) can be used either singly or in combination. In the case where two or more kinds of polyvinyl alcohols (P) are used in combination, preferably, they are combined in such a manner that the average polymerization degree and the saponification degree of the resultant mixture can fall within the above-mentioned range.

### <Content Ratio of silica particles (S) to polyvinyl alcohol (P)>

The content ratio of the silica particles (S) to the polyvinyl alcohol (P) (S/P) is 20/5 to 20/30 as a ratio by mass. From the viewpoint of further improving the adhesion force of the adhesion-enhancing layer (A) to better the adhesiveness between the base paper and the polypropylene resin layer (B), the content ratio is preferably 20/5 to 20/20, more preferably 20/6.7 to 20/20.

The mass ratio is a value as calculated in terms of the active ingredient (solid content) excluding the diluent solvent.

### <Diluent Solvent>

The necklace-like colloidal silica and the polyvinyl alcohol (P) are mixed in the above-mentioned content ratio, and diluted with water to give an aqueous solution for adhesion-enhancing layer formation.

The adhesion-enhancing layer (A) can be formed in the form of such an aqueous coating liquid, and therefore has high stability.

The active ingredient (solid content) concentration of the necklace-like colloidal silica and the polyvinyl alcohol (P) in the aqueous solution for adhesion-enhancing layer formation is, for example, 1 to 20% by mass, more preferably 3 to 15% by mass, even more preferably 5 to 15% by mass.

### <Coating Amount for adhesion-enhancing layer (A)>

Though not specifically limited, the coating amount of the adhesion-enhancing layer (A) is, from the viewpoint of bettering the adhesiveness between the base paper and the polypropylene-based resin layer (B), preferably 0.1 to 10 g/m², more preferably 0.5 to 5 g/m², even more preferably 1 to 3 g/m².

In this description, unless otherwise specifically indicated, the coating amount means a mass per unit area of the coating liquid after coating and drying.

### [Polypropylene-based Resin Layer (B)]

The polypropylene-based resin layer (B) functions as a release layer in the laminate of the present invention.

The polypropylene-based resin layer (B) for use in the laminate of the present invention is not specifically limited, and can be a polypropylene-based resin layer formed of various types of polypropylene-based resin.

The polypropylene-based resin layer (B) may be a single layer or may have a multilayer structure. The polypropylene-based resin layer (B) may be formed of one or two or more kinds of polypropylene-based resins.

Here, in the laminate of one embodiment of the present invention, preferably, the polypropylene-based resin layer (B) is formed of 2 or more layers, and at least the outermost layer on the side opposite to the adhesion-enhancing layer (A) has a tensile modulus of elasticity of 1300 MPa or more, more preferably 1400 MPa or more, even more preferably 1500 MPa or more. The tensile modulus of elasticity of the outermost layer is generally 2500 MPa or less.

When the polypropylene-based resin layer (B) has such a constitution, the surface sharpness of the polypropylene-based resin layer (B) can be kept excellent even at a high temperature of 160°C.

In this description, the tensile modulus of elasticity is a value measured according to JIS K7161-1:2014, and specifically, it is a value measured according to the method described in the section of Examples.

In the laminate of one embodiment of the present invention where the polypropylene-based resin layer (B) is formed of 2 or more layers, from the viewpoint of bettering the adhesiveness between the base paper and the polypropylene-based resin layer (B), from the viewpoint of preventing the outermost layer from cracking, and from the viewpoint of preventing the laminate from curling, preferably, a hard polypropylene-based resin layer is arranged on the outermost layer side (on the side opposite to the adhesion-enhancing layer (A)) of the laminate and a soft polypropylene-based resin layer is arranged on the side of the adhesion-enhancing layer (A). Specifically, at least the outermost layer on the side opposite to the adhesion-enhancing layer (A) has a tensile modulus of elasticity of 1300 MPa or more, more preferably 1400 MPa or more, even more preferably 1500 MPa or more. The tensile modulus of elasticity of the outermost layer is generally 2500 MPa or less. Also preferably, at least the layer on the side of the adhesion-enhancing layer (A) has a tensile modulus of elasticity of less than 1300 MPa, more preferably less than 1250 MPa. Though not specifically limited, the lowermost value is generally 1000 MPa or so. More preferably, the hardness of the polypropylene-based resin layer is gradually lowered within the above-mentioned numerical range, from the outermost layer side of the laminate toward the side of the adhesion-enhancing layer (A) thereof.

The thickness of the polypropylene-based resin layer (B) is, from the viewpoint of bettering the sharpness of the surface of the polypropylene-based resin layer (B), from the viewpoint of preventing the laminate from curling, and from the viewpoint of production cost reduction and productivity increase of the laminate, preferably 20 to 200 µm, more preferably 30 to 150 µm, even more preferably 40 to 100 µm. In the case where the polypropylene-based resin layer (B) is formed of 2 or more layers, preferably, the total thickness of the polypropylene-based resin layer (B) falls within the above-mentioned range.

In one embodiment of the present invention, the polypropylene-based resin layer (B) may contain any other component than a polypropylene-based resin within a range not detracting from the advantageous effects of the present invention.

In one embodiment of the present invention, the content of the polypropylene-based resin in the polypropylene-based resin layer (B) is, based on the polypropylene-based resin layer (B) (100% by mass), preferably 70 to 100% by mass, more preferably 80 to 100% by mass, even more preferably 90 to 100% by mass, further more preferably 95 to 100% by mass.

### <Adhesion Strength by adhesion-enhancing layer (A) between base paper and polypropylene-based resin layer (B)>

The laminate of the present invention has a laminated structure of a base paper, an adhesion-enhancing layer (A) and a polypropylene-based resin layer (B) arranged in that order. The adhesion-enhancing layer (A) arranged between the base paper and the polypropylene-based resin layer (B) improves the adhesion strength between the base paper and the polypropylene-based resin layer (B), and even after high-temperature treatment to form a synthetic leather on the laminate, a sufficient adhesion strength can be maintained. Preferably, the adhesion strength between the base paper and the polypropylene-based resin layer (B) in the laminate is 2000 mN/15 mm or more, or may cause base paper-layer breakage.

In this description, "base paper-layer breakage" means a phenomenon that, as a result of that the adhesion strength of the adhesion-enhancing layer (A) is too large, the base paper and the polypropylene-based resin layer (B) do not delaminate therebetween but the base paper and the side of the adhesion-enhancing layer (A) or the side of the polypropylene-based resin layer (B) are broken.

When a synthetic leather is formed on the laminate having such an adhesion strength and peeled therefrom, the adhesion strength between the base paper and the polypropylene-based resin layer (B) can be a sufficiently larger value than the peel strength of the synthetic leather, and therefore the synthetic layer can be stably peeled. A measurement method and an evaluation method for the adhesion strength of the laminate are described hereinunder in the section of Examples.

### [Production Method for Laminate]

The laminate of the present invention has a laminated structure of a base paper, an adhesion-enhancing layer (A) and a polypropylene-based resin layer (B) arranged in that order. A production method for the laminate of the present invention is not specifically limited. For example, the method includes a step applying an aqueous solution for adhesion-enhancing layer formation on a base paper, a step of heating and drying it to form an adhesion-enhancing layer (A) on the base paper, and a step of forming a polypropylene-based resin layer (B) on the adhesion-enhancing layer (A).

Examples of the method of applying an aqueous solution for adhesion-enhancing layer formation on a base paper includes a spin coating method, a spray coating method, a bar coating method, a knife coating method, a roll coating method, a roll knife coating method, a blade coating method, a die coating method, and a gravure coating method.

The heating and drying treatment for forming the adhesion-enhancing layer (A) is carried out, for example, at 80°C to 120°C for 30 seconds to 2 minutes or so.

Formation of the polypropylene-based resin layer (B) on the adhesion-enhancing layer (A) can be carried out, for example, by lamination. For the lamination, for example, an extrusion lamination method is employable, which is a lamination method capable of rapidly laminating the polypropylene-based resin layer. A laminate having two or more layers of the polypropylene-based resin layer (B) can be produced, for example, using a co-extrusion processing machine that enables co-extrusion lamination.

In one embodiment of the present invention, the laminate prepared in the step of forming a polypropylene-based resin layer (B) on an adhesion-enhancing layer (A) is, before the polypropylene-based resin layer (B) is cooled and solidified, pressed against a cooling roll that has been surface-smoothed, for example, by mirror-finishing and the polypropylene-based resin layer (B) is thereby surface-smoothed. Specifically, the laminate is led to pass between a cooling roll and a backup roll while pressurized therebetween, for example, in such a manner that the polypropylene-based resin layer (B) is kept in contact with the cooling roll and the base paper is in contact with the backup roll. Accordingly, a laminate in which the surface of the polypropylene-based resin layer (B) is highly smooth can be prepared.

In another embodiment of the present invention, the laminate prepared in the step of forming a polypropylene-based resin layer (B) on an adhesion-enhancing layer (A) is, before the polypropylene-based resin layer (B) is cooled and solidified, pressed against an embossing roll having a desired engraved mark therearound and the surface of the polypropylene-based resin layer (B) is thereby engraved. Specifically, the laminate is led to pass between an embossing roll and a backup roll while pressurized therebetween, for example, in such a manner that the polypropylene-based resin layer (B) is kept in contact with the embossing roll and the base paper is in contact with the backup roll. Accordingly, the engraved mark of the surface of the embossing roll is transferred to the surface of the polypropylene-based resin layer (B) to give a laminate having an embossed surface of a sharp embossed profile.

### [Use Method for Laminate]

The laminate of the present invention can be used, for example, as a casting paper.

The laminate of the present invention can secure the adhesiveness between the base paper and the polypropylene-based resin layer (B) even at high temperatures. For example, in the case where a synthetic leather or a plastic film to be produced is formed of an urethane resin, the adhesiveness between the base paper and the polypropylene-based resin layer (B) can be sufficiently maintained even at a high temperature necessary for urethanation of an urethane prepolymer. In addition, the surface sharpness of the polypropylene-based resin layer (B) can also be maintained. Accordingly, the laminate of the present invention can be used as a casting paper in a production process including a heating step at 130°C or higher.

Specifically, for example, in production of a synthetic leather and a plastic film, when the casting paper is used, the adhesiveness between the base paper and the polypropylene-based resin layer (B) can be sufficiently maintained even though the heating temperature in the heating step is 130°C or higher, and in addition, the sharpness of the surface of the polypropylene-based resin layer (B) can be maintained, and therefore, the surface design of the resultant synthetic leather and plastic film can be finished to have a high-level sharpness.

In the case where the polypropylene-based resin layer (B) is formed of two or more layers and where at least the tensile modulus of elasticity of the outermost polypropylene-based resin layer on the side opposite to the adhesion-enhancing layer (A) is 1300 MPa or more, like in the laminate of one embodiment of the present invention, the surface sharpness of the polypropylene-based resin layer (B) is excellent at a further higher temperature (for example, at 160°C). Also the adhesiveness between the base paper and the polypropylene-based resin layer (B) can be maintained. Accordingly, the laminate of one embodiment of the present invention of this type is suitable for use as a casting paper at a further higher temperature.

Here, the laminate of the present invention is favorably used especially as a casting paper for synthetic leather production.

Specifically, on the polypropylene-based resin layer (B) as a release layer of the laminate of the present invention, a resin for synthetic leather production such as an urethane resin is applied, then heated to form an urethane resin layer thereon, and further, a base fabric is stuck thereto via an adhesive and matured. Finally, along with the base fabric, the urethane resin layer is peeled from the casting paper to produce a synthetic leather. The laminate of the present invention can maintain sufficient adhesiveness between the base paper and the polypropylene-based resin layer (B) even at 130°C or higher. In addition, the sharpness of the surface of the polypropylene-based resin layer (B) can be maintained. Accordingly, in the case where an enamel-like synthetic leather is produced without separating the base paper and the polypropylene-based resin layer (B), a synthetic leather having a smooth and glossy surface can be produced. In the case of producing an emboss-patterned synthetic leather, a synthetic leather whose surface has a glossy and sharp embossed profile can be produced.

### Examples

The present invention is described more specifically with reference to the following Examples, but the present invention is not limited to the following Examples.

### [Method for Measurement of Physical Properties]

The physical properties described in the following Production Examples, Examples and Comparative Examples were measured according to the following methods.

### <Oken-type Smoothness>

The Oken-type smoothness was measured according to JIS P8155:2010, using an Oken-type air permeability and smoothness tester (Model Number: KY5, from Asahi Seiko Co., Ltd.).

### <Tensile Modulus of Elasticity>

The polypropylene-based resin used in Examples and Comparative Examples was formed into a single-layer film under the same conditions as in Examples and Comparative Examples, and the tensile modulus of the resultant film at 23°C was measured according to JIS K7161-1:2014. Specifically, a test piece of the polypropylene-based resin used in Examples and Comparative Examples was tested in a tensile test at a speed of 1 mm/min using a tensile tester (from Shimadzu Corporation, Model Number: Autograph AG-IS 500 N) to measure the tensile modulus of elasticity (MPa) thereof.

### <Layer Thickness >

The layer thickness was measured using a constant-pressure thickness meter (Model Number: PG-02J, from TECLOCK Co., Ltd., according to a standard of measure: JIS K6783:1994, Z1702:1994, Z1709:1995).

### [Examples 1 to 6]

Aqueous solutions 1 to 6 for adhesion-enhancing layer formation used in Examples and Comparative Examples were prepared according to the following method.

### <Production Example 1: Preparation of aqueous solution 1 for adhesion-enhancing layer formation>

A pearl necklace-type colloidal silica (trade name: Snowtex (registered trademark) from Nissan Chemical Corporation, Model Number: ST-PS-M, solid concentration 20% by mass (solvent: water), average particle size 0.10 to 0.15 µm) was used as silica particles (S). (In Table 1, this was abbreviated as ST-PS-M).

For a polyvinyl alcohol (P), a polyvinyl alcohol 1 (trade name: Kuraray Poval (registered trademark) from Kuraray Co., Ltd., Model Number; PVA117, average polymerization degree: 1700, saponification degree: 98 to 99%) and a polyvinyl alcohol 2 (trade name: Kuraray Poval (registered trademark) from Kuraray Co., Ltd., Model Number; PVA105, average polymerization degree: 500, saponification degree: 98 to 99%) were mixed in a mass ratio of 1/1 to prepare a polyvinyl alcohol (average polymerization degree: 1200) (abbreviated as "PVA" in Table 1).

A mixture of the silica particles (S) and the polyvinyl alcohol (P) mixed in a ratio of S/P = 20/6.7 (by mass) was diluted with water to prepare an aqueous solution having a mixture concentration of 10% by mass to be an aqueous solution 1 for adhesion-enhancing layer formation.

In this Example, the mass ratio is a value as calculated in terms of the active ingredient (solid content), and the same shall apply to the ratio by mass shown below.

### <Production Example 2: Preparation of aqueous solution 2 for adhesion-enhancing layer formation>

According to the same method as in Production Example 1, except that the blending ratio of the mixture of the silica particles (S) and the polyvinyl alcohol (P) was changed to S/P = 20/10 (ratio by mass), an aqueous solution 2 for adhesion-enhancing layer formation was prepared.

### <Production Example 3: Preparation of aqueous solution 3 for adhesion-enhancing layer formation>

According to the same method as in Production Example 1, except that the blending ratio of the mixture of the silica particles (S) and the polyvinyl alcohol (P) was changed to S/P = 20/20 (ratio by mass), an aqueous solution 3 for adhesion-enhancing layer formation was prepared.

### <Production Example 4: Preparation of aqueous solution 4 for adhesion-enhancing layer formation>

According to the same method as in Production Example 1, except that the blending ratio of the mixture of the silica particles (S) and the polyvinyl alcohol (P) was changed to S/P = 20/40 (ratio by mass), an aqueous solution 4 for adhesion-enhancing layer formation was prepared.

### <Production Example 5: Preparation of aqueous solution 5 for adhesion-enhancing layer formation>

According to the same method as in Production Example 1, except that the polyvinyl alcohol (P) was not blended (in Table 1, the blending ratio of the silica particles (S) and the polyvinyl alcohol (P) was expressed as S/P = 20/0 (ratio by mass)), an aqueous solution 5 for adhesion-enhancing layer formation was prepared.

### <Production Example 6: Preparation of aqueous solution 6 for adhesion-enhancing layer formation>

According to the same method as in Production Example 2, except that, as the silica particles (S), a spherical colloidal silica (from Nissan Chemical Corporation, Model Number: MP-2040, solid concentration 40% by mass (solvent: water), average particle size 0.17 to 0.23 pm) (abbreviated as "spherical" in Table 1) was used, a laminate was produced.

### [Examples 1 to 10 and Comparative Examples 1 to 7]

Laminates of Examples 1 to 10 and Comparative Examples 1 to 7 were produced according to the following process.

### <Polypropylene-based Resins X, Y and Z>

Polypropylene-based resins X, Y and Z used in Examples 1 to 10 and Comparative Examples 1 to 7 are shown below.

### (Polypropylene-based Resin X)

Trade name: SunAllomer PHA03A, from SunAllomer Ltd.
Polypropylene-based resin having a melt flow rate (MFR) of 42 g/10 min, a density of 0.90 g/cm³ and a melting point of 164°C, and having a tensile modulus of elasticity of 1230 MPa

### (Polypropylene-based Resin Y)

Trade name: Y2000GV, from Prime Polymer Co., Ltd.
Polypropylene-based resin having a melt flow rate (MFR) of 18 g/10 min, a density of 0.90 g/cm³ and a melting point of 164°C, and having a tensile modulus of elasticity of 1570 MPa

### (Polypropylene-based Resin Z)

Trade name: J137M, from Prime Polymer Co., Ltd.
Polypropylene-based resin having a melt flow rate (MFR) of 30 g/10 min, a density of 0.90 g/cm³ and a melting point of 164°C, and having a tensile modulus of elasticity of 2300 MPa

### <Example 1>

Using an air-knife coater, the aqueous solution 1 for adhesion-enhancing layer formation was applied to the cast-coated surface of a cast-coated paper (from Nippon Paper Industries Co., Ltd., Oken-type smoothness: 5000 seconds, weight: 165 g/m²) used as a base paper, and heated at 100°C for 1 minute to form an adhesion-enhancing layer having a coating amount of 3 g/m².

Next, co-extrusion lamination was carried out using a two-layer co-extruder. On the adhesion-enhancing layer, the polypropylene-based resin X and the polypropylene-based resin Y were laminated through coextrusion so as to have a thickness of 20 µm each and to have a total thickness of 40 µm, thereby producing a laminate. In Example 1, the layer of the polypropylene-based resin X is a layer on the side of the adhesion-enhancing layer, and the layer of the polypropylene based resin Y is an outermost layer.

The resin melting temperature in lamination was 300°C.

The laminate extruded out from the two-layer co-extruder was led to pass through rolls and cooled therebetween so that the surface on the side of the polypropylene-based resin Y could be kept in contact with a cooling roll.

The cooling water temperature in the cooling roll was 23°C.

The cooling roll was one that had been mirror-polished (roll surface roughness: Rₘₐₓ 0.05 µm or less, hard chromium-plated supermirror finishing) in order that the resultant synthetic leather could have an enamel-like surface profile. Accordingly, the surface of the outermost layer of the laminate was a highly glossy surface having a gloss level of 80% or more under the condition of a reflection angle of 20°.

Using the corona discharging device attached to the two-layer co-extruder, the adhesion-enhancing layer formed on the base paper was corona-discharged before formation of the polypropylene-based resin layer thereon.

### <Example 2>

A laminate was produced according to the same method as in Example 1, except that the aqueous solution 2 for adhesion-enhancing layer formation was used in place of the aqueous solution 1 for adhesion-enhancing layer formation.

### <Example 3>

A laminate was produced according to the same method as in Example 1, except that the aqueous solution 3 for adhesion-enhancing layer formation was used in place of the aqueous solution 1 for adhesion-enhancing layer formation.

### <Example 4>

A laminate was produced according to the same method as in Example 2, except that a coated paper (from Nippon Paper Industries Co., Ltd., Oken-type smoothness: 200 seconds, weight: 165 g/m²) was used in place of the cast-coated paper.

### <Example 5>

A laminate was produced according to the same method as in Example 4, except that the thickness of the layer formed of the polypropylene-based resin X (layer on the side of the adhesion-enhancing layer) and the layer formed of the polypropylene-based resin Y (outermost layer) was changed to 40 µm each thereby having a total thickness of 80 µm.

### <Example 6>

A laminate was produced according to the same method as in Example 2, except that the thickness of the layer formed of the polypropylene-based resin X (layer on the side of the adhesion-enhancing layer) and the layer formed of the polypropylene-based resin Y (outermost layer) was changed to 30 µm each thereby having a total thickness of 60 µm.

### <Example 7>

A laminate was produced according to the same method as in Example 5, except that the polypropylene-based resin X was not used and two layers of the polypropylene-based resin Y were formed through co-extrusion to be a layer on the side of the adhesion-enhancing layer and an outermost layer.

### <Example 8>

A laminate was produced according to the same method as in Example 7, except that the thickness of the two layers of the polypropylene-based resin Y was changed to 20 µm each so as to have a total thickness of 40 µm.

### <Example 9>

A laminate was produced according to the same method as in Example 8, except that the polypropylene-based resin Y was changed to the polypropylene-based resin Z, and two layers of the polypropylene-based resin Z were laminated through co-extrusion as a layer on the side of the adhesion-enhancing layer and an outermost layer.

### <Example 10>

A laminate was produced according to the same method as in Example 2, except that the polypropylene-based resin Y was changed to the polypropylene-based resin X, and two layers of the polypropylene-based resin X were laminated through co-extrusion as a layer on the side of the adhesion-enhancing layer and an outermost layer.

### <Comparative Example 1>

A laminate was produced according to the same method as in Example 1, except that the aqueous solution 5 for adhesion-enhancing layer formation was used in place of the aqueous solution 1 for adhesion-enhancing layer formation.

### <Comparative Example 2>

A laminate was produced according to the same method as in Example 1, except that the aqueous solution 4 for adhesion-enhancing layer formation was used in place of the aqueous solution 1 for adhesion-enhancing layer formation.

### <Comparative Example 3>

A laminate was produced according to the same method as in Example 1, except that a wood-free paper (from Nippon Paper Industries Co., Ltd., Oken-type smoothness: 40 seconds, weight: 127.9 g/m²) was used in place of the cast-coated paper, the adhesion-enhancing layer was not formed, and the polypropylene-based resin Y was changed to the polypropylene-based resin X to form two layers of the polypropylene-based resin X as a layer on the side of the adhesion-enhancing layer and an outermost layer.

<Comparative Example 4>

A laminate was produced according to the same method as in Comparative Example 3, except that the thickness of the two layers of the polypropylene-based resin X was changed to 40 µm each so as to have a total thickness of 80 µm.

### <Comparative Example 5>

A laminate was produced according to the same method as in Comparative Example 4, except that a coated paper (from Nippon Paper Industries Co., Ltd., Oken-type smoothness: 200 seconds, weight: 165 g/m²) was used in place of the wood-free paper.

### <Comparative Example 6>

A laminate was produced according to the same method as in Comparative Example 3, except that a cast-coated paper (from Nippon Paper Industries Co., Ltd., Oken-type smoothness: 5000 seconds, weight: 165 g/m²) was used in place of the wood-free paper.

### <Comparative Example 7>

A laminate was produced according to the same method as in Example 1, except that the aqueous solution 6 for adhesion-enhancing layer formation was used in place of the aqueous solution 1 for adhesion-enhancing layer formation.

### [Evaluation Methods]

The laminates of Examples 1 to 10 and Comparative Examples 1 to 7 were tested as follows.

### <Evaluation of Adhesion Strength and Adhesiveness>

The adhesion strength of the laminates produced in Examples and Comparative Examples was measured according to the following method, and the laminates were evaluated in point of the adhesiveness thereof under high-temperature treatment conditions.

First, an unheated laminate was cut into a size of 200 mm x 15 mm. Precisely, the MD (machine direction) was 200 mm and CD (cross direction) was 15 mm.

An unheated sample of the laminate that had been cut but was not heated, a sample heated with an air drier at 130°C for 2 minutes and a sample heated at 160°C for 2 minutes were prepared, and these laminate samples were evaluated in point of the adhesion strength thereof.

Using a universal tensile tester (from Orientec Co., Ltd., Model Number: Tensilon RTC-1210A), these laminate samples were tested for measurement of the adhesion force thereof according to JIS Z0237:2009. Briefly, the base paper and the polypropylene-based resin layer were peeled, and the adhesion strength (mN/15 mm) of each sample was measured. Regarding the peeling condition for adhesion strength measurement, the base paper side of the laminate was fixed to a flat plate in an environment at a temperature of 23°C and a relative humidity of 50%, and the polypropylene-based resin layer side was folded, and pulled at a peel angle of 180 degrees and at a speed of 300 mm/min, and the resultant load was referred to as an adhesion strength.

In measurement of the adhesion strength of the unheated laminate and the laminate heated at 160°C for 2 minutes, the sample was checked for base paper-layer breakage.

The criteria for evaluation of adhesiveness in high-temperature treatment are as follows.

A: The adhesion strength of the sample is 2000 mN/15 mm or more under the heating condition of 130°C for 2 minutes and 160°C for 2 minutes, or the sample experienced base paper-layer breakage in the high-temperature treatment.

B: The adhesion strength of the sample is less than 2000 mN/15 mm under at least one heating condition of 130°C for 2 minutes or 160°C for 2 minutes.

### <Evaluation of Glossiness>

The 20°-mirror surface glossiness of the surface of the outermost polypropylene-based resin layer of the laminate was measured using a digital precision gloss meter (from Murakami Color Research Laboratory Co., Ltd., Model Number: GM-26D).

The measurement was carried out under 4 conditions of the unheated laminate, the laminate heated at 130°C for 2 minutes, the laminate heated at 150°C for 2 minutes, and the laminate heated at 160°C for 2 minutes.

The evaluation criteria are as follows.
A: All the samples heated at 130°C, heated at 150°C and heated at 160°C had a glossiness of 75% or more.
B: The sample heated at 130°C had a glossiness of 75% or more, but the sample heated at 150°C had a glossiness of 65% or more and the sample heated at 160°C had a glossiness of less than 65%.
C: The sample heated at 130°C had a glossiness of 75% or more, but the sample heated at 150°C and the sample heated at 160°C had a glossiness of less than 65%.
D: All the samples heated at 130°C, heated at 150°C and heated at 160°C had a glossiness of less than 65%.

The results are shown in Table 1.

In Table 1, "polypropylene-based resin X", "polypropylene-based resin Y" and "polypropylene-based resin Z" used for the polypropylene-based resin layer (B) were abbreviated as "X", "Y" and "Z", respectively.

**Table 1**

| | Bane Paper | Adheadion-Enhancing Layer | | | Polypropylanu-based Resin Layer(B) | | | Adhesion Strength (mN/15 mm) | | | | Glossiness (%) (20° reflection angle) before and after heating | | | | | Comprehensive Evaluation |
|---|---|---|---|---|---|---|---|---|---|---|---|---|---|---|---|---|---|
| | | Filler | Binder | Blending Ratio (ratio by mass) | Layer on the side of adhesion-enbancin g layer | Outermost Layer | Total Thickness of 2 layers (µm) | Unheated | Heated at 130°C for 2 min | Heated at 160°C for 2 min | Evaluation | 160°C | 150°C | 130°C | Unheated | Evalua tion | |
| Example 1 | cast-coated paper | ST-PS-M | PVA | 20/6.7 | X | Y | 40 | 4700 | 2940 | 2450 | A | 81 | 87 | 87 | 87 | A | good |
| Example 2 | cast-coate paper | ST-PS-M | PVA | 20/10 | X | Y | 40 | 6170 | 3040 | paper layer breakage | A | 81 | 87 | 87 | 86 | A | good |
| Example 3 | cast-coated paper | BT-PS-M | PVA | 20/20 | X | Y | 40 | 4900 | 8140 | paper-layer breakage | A | 81 | 86 | 87 | 87 | A | good |
| Example 4 | coated | ST-PS-M | PVA | 20/10 | X | Y | 40 | 8860 | 5550 | 4600 | A | 78 | 85 | 86 | 85 | A | good |
| Example 5 | | ST-PS-M | PVA | 20/10 | X | Y | 80 | 4970 | 5710 | 4740 | A | 80 | 86 | 87 | 85 | A | good |
| Example 6 | cast-coated paper | ST-PS-M | PVA | 20/10 | X | Y | 60 | 3920 | 2550 | 2100 | A | . 82 | 87 | 87 | 86 | . A | good |
| Example 7 | coated | ST-PS-M | PVA | 20/10 | Y | Y | 80 | 5390 | 4900 | 4000 | A | 80 | 85 | 85 | 85 | A | good |
| Example 8 | coated | ST-PS-M | PVA | 20/10 | Y | Y | 40 | 4900 | 4700 | 3760 | A | 80 | 84 | 85 | 85 | A | good |
| Example 9 | cast-coate paper | ST-PS-M | PVA | 20/10 | Z | Z | 40 | 5100 | 4410 | 3520 | A | 80 | 82 | 82 | 82 | A | good |
| Example 10 | cast-coate paper d | ST-PS-M | PVA | 20/10 | X | X | 40 | 5500 | 3200 | base paper-layer breakage | A | 47 | 65 | 77 | 83 | B | good |
| "Comparative Example 1 | | ST-PS-M | PVA | 20/0 | X | Y | 40 | 1180 | 784 | 70 | B | 80 | 86 | 87 | 86 | A | not good |
| Comparative Example 2 | cast-coated paper | ST-PS-M | PVA | 20/40 | X | Y | 40 | 196 | 0 | 50 | B | 80 | 88 | 84 | 86 | A | not good |
| Comparative Examples | wood-*free* paper | no | no | - | X | X | 40 | base paper layer breakage base | 4900 | 2940 | A | 13 | 40 | 55 | 80 | D | not good |
| Comparative Example 4 | wood-free paper | no | no | - | X | X | 80 | papar-layer breakage | 4700 | 4110 | A | 15 | 42 | 63 | 83 | D | not good |
| Comparative Example 6 | coated paper | no | no | - | X | X | 80 | 3920 | 1740 | 820 | B | 50 | 62 | 78 | 83 | C | not good |
| Comparative Example 6 | cast coated ^{I}c^{oat-}coate^{d} paper | no | no | - | X | X | 40 | 3360 | 294 | 60 | B | 47 | 64 | 77 | 84 | C | not good |
| Comparative Example 7 | cast-coated paper | spherical | PVA | 20/10 | X | Y | 40 | 4900 | 980 | 1080 | B | 80 | 82 | 87 | 86 | A | not good |

Table 1 confirms the following.

From Comparative Examples 3 and 4, it is known that, even when the thickness of the polypropylene-based resin layer is changed, the surface glossiness of the polypropylene-based resin layer does not change greatly, and the thickness thereof does not have any significant influence on the surface smoothness of the polypropylene-based resin layer.

On the other hand, from the results of Comparative Examples 3 and 4, Comparative Example 5 and Comparative Example 6, it is known that, when the smoothness of the base paper is increased, the adhesiveness between the base paper and the polypropylene-based resin layer lowers and the adhesiveness cannot be maintained in heating at 130°C.

As opposed to these, from Examples 1 to 10, it is known that, by providing the adhesion-enhancing layer, the surface smoothness of the polypropylene-based resin layer can be kept good in heating at 130°C, and further the adhesiveness between the base paper and the polypropylene-based resin layer can be sufficiently maintained even in heating at 130°C.

Moreover, as in Examples 1 to 9, it is known that, when the polypropylene-based resin layer having a high tensile modulus of elasticity is provided as an outermost layer, the surface smoothness of the polypropylene-based resin layer can be kept good even in heating at 160°C. Further, it is known that, even in heating at 160°C, the adhesiveness between the base paper and the polypropylene-based resin layer can be sufficiently maintained.

However, it is known that, when the content ratio of the necklace-like colloidal silica particles (S) to the polyvinyl alcohol (P) in the adhesion-enhancing layer oversteps a range of 20/5 to 20/30 as a ratio by mass, like in Comparative Examples 1 and 2, the adhesiveness between the base paper and the polypropylene-based resin layer lowers and the adhesiveness could not be maintained in heating at 130°C.

Further, it is known that, when the necklace-like colloidal silica particles (S) are changed to spherical silica particles like in Comparative Example 7, the adhesiveness between the base paper and the polypropylene-based resin layer lowers and the adhesiveness could not be maintained in heating at 130°C.

### Reference Signs List

- 1a, 1b: Laminate
- 11: Base Paper
- 12: Adhesion-Enhancing Layer
- 13, 13a, 13b: Polypropylene-based Resin Layer

## Claims

1. A laminate having a laminated structure of a base paper, an adhesion-enhancing layer (A) and a polypropylene-based resin layer (B) laminated in that order, wherein:
at least the surface on the side of the adhesion-enhancing layer (A) of the base paper has an Oken-type smoothness of 100 seconds or more, and
the adhesion-enhancing layer (A) comprises necklace-like colloidal silica-derived silica particles (S) and a polyvinyl alcohol (P), and the content ratio of the silica particles (S) to the polyvinyl alcohol (P) (S/P) is 20/5 to 20/30 as a ratio by mass.

2. The laminate according to claim 1, wherein the necklace-like colloidal silica is a pearl necklace-like one.

3. The laminate according to any one of claim 1 or 2, wherein the polypropylene-based resin layer (B) is formed of 2 or more layers, and
the outermost layer at least on the side opposite to the adhesion-enhancing layer (A) has a tensile modulus of elasticity of 1300 MPa or more.

4. A casting paper comprising the laminate of any one of claims 1 to 3.

5. A casting paper for synthetic leather production, comprising the laminate of any one of claims 1 to 3.
